# EUROPÄISCHE PATENTSCHRIFT

(11) **EP 2 046 564 B1**
(45) Veröffentlichungstag und Bekanntmachung des Hinweises auf die Patenterteilung: **25.04.2012**
(21) Anmeldenummer: 07765007.5
(22) Anmeldetag: 03.07.2007
(51) Int. Cl.: B29C 70/08, B29C 70/44, B29C 70/50, B29C 70/86

(54) **Verfahren zur Herstellung von mehreren Faserverbundbauteilen**
Method for production of several fibre composite components
Procédé de production de plusieurs éléments composites à base de fibres

(30) Priorität: 31.07.2006 DE 102006035939
(43) Veröffentlichungstag der Anmeldung: 15.04.2009
(73) Patentinhaber: Airbus SAS, 31707 Blagnac Cedex (FR)
(72) Erfinder: FILSINGER, Jürgen, 85635-Hoehenkirchen-Siegertsbrunn (DE); MAIDL, Franz, 94574 Wallerfing (DE); GESSLER, Andreas, 85540 Haar (DE); SCHOUTEN, Marinus, 83607 Holzkirchen (DE)
(74) Vertreter: Petit, Maxime
(86) Internationale Anmeldenummer: PCT/EP2007/005856
(87) Internationale Veröffentlichungsnummer: WO 2008/014858

(56) Entgegenhaltungen:
- EP-A- 0 069 539
- EP-A- 1 798 428
- DE-A1- 10 326 422
- FR-A1- 2 760 397
- US-A- 4 512 835

## Beschreibung

Die vorliegende Erfindung betrifft ein Verfahren zur Herstellung von Faserverbundbauteilen.

Die Verwendung von Faserverbundbauteilen ist vor allem wegen ihrer hohen spezifischen Festigkeit (Verhältnis von Festigkeit zu Gewicht) in vielen Anwendungsbereichen interessant. Ein Faserverbundwerkstoff ist ein Mischwerkstoff, der im Allgemeinen aus zwei Hauptkomponenten besteht, nämlich einer Matrix und darin eingebetteten Fasern. Durch gegenseitige Wechselwirkungen dieser Komponenten erhält der Werkstoff höherwertigere Eigenschaften als jede der beiden einzeln beteiligten Komponenten.

Im Besonderen betrifft die vorliegende Erfindung die Herstellung von hochbeanspruchten Profilen mit einer mehr oder weniger komplizierten Formgebung. Gemäß eines auf internen betrieblichen Kenntnissen der Anmelderin beruhenden Stands der Technik werden beispielsweise CFK-Profile derzeit zumeist entweder in Prepreg-Technologie oder durch Drapieren von textilen Halbzeugen (Gewebe, Gelege, Fasermatten etc.) aus Kohlenstofffaser hergestellt. Damit ist jedoch ein relativ hoher Anteil an manueller Arbeit verbunden. Bei der Herstellung von gekrümmten Profilen beträgt der Verschnitt typischerweise bis zu 50 %.

Als ein rationelleres Fertigungsverfahren mit geringem Anteil an Abfall ist für die Herstellung von CFK-Profilen bisher nur die so genannte Pultrusion bekannt. Mit diesem Verfahren können aber lediglich gerade Profile mit konstantem Querschnitt gefertigt werden. Lokale Aufdickungen, partiell optimierte Faserwinkel oder gar Änderungen der Form sind nicht möglich. In der Folge müssen solche Bauteile in der Praxis oftmals in aufwendiger Nacharbeit mit Aufdickungen (z. B. zur Versteifung und/oder eine spätere Krafteinleitung) versehen werden.

Die Patentoffeniegungsschrift US-4,512,835 zeigt ein strukturelles Faserverbundteil mit gekrümmtem Verlauf. Das Faserverbundteil hat ein Kernteil, das mit Fasermaterial umgewickelt ist. Diese Schrift beschreibt auch ein Verfahren, um mehrere solche Faserverbundtelle zu erzeugen.

Die europäische Patentanmeldung EP-1 798 428 betrifft ein Faserverbundteil und auch ein Verfahren zum Herstellen desselben. Das Faserverbundteil umfasst ein Kernelement mit einer konkav ausgebildeten Stirnseite, an die sich eine DurchgangstSffnung anschließt. Die jeweils gegenuberliegenden Quer- oder Längsseiten des Kernselements und die nicht vom Kernelement begrenzte Seite der Durchgangsöffnung sind von einem geflochtenen Faserverbundelement schlaufenartig umschlossen.

Es ist daher eine Aufgabe der vorliegenden Erfindung, ein einfaches Verfahren zur Herstellung von Faserverbundbauteilen anzugeben, welches sich insbesondere auch zur Herstellung von komplizierter gestalteten Faserverbundbauteilen eignet, wie z. B. Profilen mit variierendem Profilquerschnitt und/oder mit wenigstens abschnittweise gekrümmtem Verlauf,

Diese Aufgabe wird gemäß der Erfindung gelöst durch ein Verfahren zur Herstellung von Faserverbundbauteilen, umfassend die Schritte;
a) Bereitstellen mehrerer Kernteile,
b) separates Aufbringen eines ersten Fasermaterials auf jedes der Kerntelle,
c) Aneinanderfügen der mit dem ersten Fasermaterial belegten Kernteile zur Bildung einer Kernteilrelhe,
d) Aufbringen eines für die Kernteilreihe gemeinsamen zweiten Fasormaterials entlang wenigstens einer Seite der Kernteilreihe, an welcher die Kernteile mit dem ersten Fasermaterial belegt sind,
e) Infiltrieren und Aushärten des ersten und zweiten Fasermaterials zur Bildung eines faserverstärkten Bautellkörpers, und
f) Auftrennen des Bauteilkorpers in mehrere Abschnitte, welche die mehreren Faserverbundbauteile darstellen, wobei das Auftrennen durch mehrere, jeweils im Bereich eines der Kernteile verlaufende Trennschnitte erfolgt, wobei durch jeden Trennschnitt das am betreffenden Kernteil angrenzende Fasermaterial (16, 20) entzweit und somit verschiedenen der resultierenden Faserverbundbautelle zugeordnet wird
und dadurch gekennzeichnet, dass die Kernteile im Schritt a) mit jeweils einer lokalen Aussparung an der Kernteiloberfläche bereitgestellt werden und die lokalen Aussparungen im Schritt b) zunächst mit zusätzlichem Fasermaterial ausgefüllt und nachfolgend beim Aufbringen des ersten Fasermaterials vollständig überdeckt werden.

Mit diesem Verfahren können in einfacher Weise auch komplizierter geformte Faserverbundbauteile hergestellt werden, insbesondere z. B, auch langgestreckte gekrümmte Profilbauteile mit unregelmäßigem Krümmungsradius. Ein besonderer Vorteil der Erfindung besteht darin, dass mit dem Verfahren mehrere Faserverbundbauteile, insbesondere mehrere identische Faserverbundbauteile, gleichzeitig und somit kostengünstig hergestellt werden können ("Paketfertigung"). In dieser Hinsicht ist die gleichzeitige Herstellung von wenigstens drei, insbesondere wenigstens fünf oder sogar wenigstens zehn Bauteilen bevorzugt.

Prinzipiell unterliegt das erfindungsgemäße Verfahren keinen besonderen Einschränkungen hinsichtlich der Art des verwendeten Fasermaterials (z. B. einzelne Fasern, Rovings, flächige Faserhalbzeuge etc.) sowie hinsichtlich der Art des verwendeten Matrixmaterials. In einer Ausführungsform ist die Verwendung von Kohlenstofffasern vorgesehen. Alternativ oder zusätzlich können jedoch ohne weiteres auch andere Fasern verwendet werden, wie beispielsweise Glasfasern, synthetische Kunststofffasern, Stahlfasern oder Naturfasern. Als Matrixmaterial sind insbesondere Kunststoffe wie z. B. duroplastische Kunststoffe (Kunstharze) interessant. Diese Aufzählungen sind jedoch lediglich beispielhaft zu verstehen. Außerdem können gegebenenfalls in an sich bekannter Weise Füllstoffe oder Additive zugegeben werden.

Die hier verwendeten Begriffe "erstes Fasermaterial" und "zweites Fasermaterial" sollen zum Ausdruck bringen, dass bei dem erfindungsgemäßen Verfahren in zwei Stadien Fasermaterial zum Einsatz kommt, nämlich zunächst im Schritt b) beim separaten Aufbringen eines Fasermaterials auf jedes der Kernteile und später im Schritt d) beim Aufbringen eines Fasermaterials auf die zuvor gebildete Kernteilreihe. Mit diesen Begriffen soll nicht zum Ausdruck gebracht werden, dass das erste Fasermaterial sich von dem zweiten Fasermaterial unterscheiden muss. Dies kann zwar so vorgesehen sein, ist jedoch keineswegs zwingend. In diesem Sinne können auch mehrere verschiedene erste Fasermaterialien im Schritt b) und/oder mehrere verschiedene zweite Fasermaterialen im Schritt d) zum Einsatz kommen. Der Begriff "Aufbringen" (des betreffenden Fasermaterials) ist im Rahmen der Erfindung sehr breit zu verstehen. Einzelne Fasern können z. B. durch einen Umflechtungs- bzw. Umwicklungsprozess aufgebracht werden. Alternativ oder zusätzlich kann das Aufbringen auch als Auflegen (insbesondere bei einem flächigen textilen Halbzeug), gegebenenfalls fixiert durch eine Haftschicht, vorgesehen sein.

In einer bevorzugten Ausführungsform sind die Kernteile als Profilteile ausgebildet, deren Profilquerschnitt über die Profillängserstreckung variiert und/oder deren Profillängserstreckung einen wenigstens abschnittweise gekrümmten Verlauf besitzt. Da die verwendeten Kernteile formgebend für die hergestellten Bauteile sind, können mit dieser Maßnahme dementsprechend Profilbauteile hergestellt werden, deren Profilquerschnitt über die Profillängserstreckung variiert und/oder deren Profillängserstreckung einen wenigstens abschnittweise gekrümmten (einschließlich "abgeknickten") Verlauf besitzt. In einer bevorzugten Ausführungsform sind die hergestellten Profilbauteile hierbei langgestreckt, insbesondere mit einer Profillängserstreckung, die wenigstens um einen Faktor 5, insbesondere wenigstens um einen Faktor 10 größer als eine maximale Profilquererstreckung ist.

Zur Herstellung einer Mehrzahl von langgestreckten Profilbauteilen können z. B. im Schritt a) mehrere identische langgestreckte Profilkernteile bereitgestellt werden, die nach dem Aufbringen des Fasermaterials im Schritt b) mit ihren Längsseiten zur Bildung der Kernteilreihe aneinandergefügt werden, bevor im Schritt d) das für die Kernteilreihe gemeinsame Fasermaterial aufgebracht, z. B. aufgelegt wird. Die Kernteilreihe besitzt dann eine Länge, die der Länge der einzelnen Profilkernteile entspricht und eine Breite, die der Summe der Breiten der einzelnen Profilkernteile zuzüglich den Dicken des Fasermaterials in Aneinanderfügungs- bzw. reihungsrichtung entspricht.

Die bei dem Verfahren verwendeten Kernteile können wiederverwendbar oder nicht wiederverwendbar vorgesehen sein. Bei wiederverwendbaren Kernteilen, die beispielsweise aus Metall (z. B. Aluminium) hergestellt sein können, ist lediglich darauf zu achten, dass diese beim Auftrennen des Bauteilkörpers im Schritt f) nicht beschädigt werden, falls sich die Kernteile zu diesem Zeitpunkt noch innerhalb des Bauteilkörpers befinden. Nicht wiederverwendbare Kernteile können in einfacher Weise z. B. aus Kunststoff, insbesondere Schaumkunststoff gebildet sein und beim Auftrennen des Bauteilkörpers gegebenenfalls auseinander geschnitten und somit zerstört werden.

Mit dem Verfahren gemäß der Erfindung können in einfacher Weise lokale Aufdickungen für das fertige Bauteil geschaffen werden. Alternativ oder zusätzlich kommt hierfür in Betracht, solche lokalen Aufdickungen dadurch zu realisieren, dass das erste Fasermaterial im Schritt b) und/oder das zweite Fasermaterial im Schritt d) in einer Dicke aufgelegt wird, die an einer oder mehreren Stellen erhöht ist.

Lokale Aufdickungen können gegebenenfalls durch ein spezielles Material, z. B. Fasermaterial gebildet werden, welches sich von dem ersten Fasermaterial und/oder dem zweiten Fasermaterial unterscheiden kann. Wenn hierfür das Kernteil eine oder mehrere der oben erwähnten lokalen Aussparungen aufweist, so kann in diese Aussparungen beispielsweise jeweils ein oder mehrere Zuschnitte eines textilen Halbzeugs eingelegt werden (Integration von Verstärkungslagen). In einer spezielleren Ausführungsform ist vorgesehen, dass eine lokale Aussparung an der Oberfläche des betreffenden Kernteils plan aufgefüllt wird und nachfolgend beim Aufbringen des ersten Fasermaterials vollständig überdeckt wird.

In einer bevorzugten Ausführungsform ist vorgesehen, dass im Schritt b) das Aufbringen des ersten Fasermaterials ein Umflechten und/oder Umwickeln der einzelnen Kernteile umfasst, Diese Methode der Aufbringung des ersten Fasermaterials lässt sich sehr gut automatisieren, wobei z. B. ein Verfahren bzw. eine Vorrichtung verwendet werden können, wie sie in der deutschen Patentoffenlegungsschrift DE 10 2004 017 311 A1 (zum Herstellen von Faserverbund-Halbzeugen) beschrieben sind. Dementsprechend kann das Aufbringen des ersten Fasermaterials im Schritt b) insbesondere mittels Rundflechttechnik erfolgen, wobei das betreffende Kernteil mit Flechtfäden beflochten wird, die über konzentrisch um das Kernteil in unterschiedliche Richtung umlaufende Klöppel abgespult werden, wobei insbesondere vorgesehen sein kann, dass die Klöppel einer Umlaufrichtung mit Verstärkungsfäden und die Klöppel der entgegengesetzten Umlaufrichtung zumindest teilweise mit Stützfäden bestückt sind, welche die Verstärkungsfäden in Position halten können und welche zumindest teilweise aus Thermoplastfäden bestehen können. In einer bevorzugten Weiterbildung wird das Kernteil mehrmals beflochten, wobei jeweils unidirektionale Einzellagen des ersten Fasermaterials auf dem Kernteil aufgelegt werden. Mit einer automatisierten Aufbringung des ersten Fasermaterials durch eine Rundflechttechnik kann vorteilhaft eine hohe Reproduzierbarkeit und eine gut definierte Faserorientierung (unidirektional oder multidirektional) erzielt werden. Außerdem können während des Rundflechtprozesses zusätzliche Fasermaterialbänder in einfacher Weise zwischengefügt werden. In einer bevorzugten Ausführungsform der Umflechtung wird ein ebenes, d. h. nichtwelliges Geflecht erzeugt.

Die oben erläuterten lokalen Aufdickungen können bereits unmittelbar beim Umflechten und/oder Umwickeln im Schritt b) erzeugt werden, oder aber durch lokal mehrfache Umflecht- bzw. Umwickelprozesse, oder auch durch zusätzlich hinzugefügtes flächiges Fasermaterial-Halbzeug (Zuschnitte, Bänder etc.).

Als eine Alternative zum Umflechten bzw. Umwickeln im Schritt b) kommt prinzipiell insbesondere auch ein Drapieren von Faserwerkstofflagen in Betracht, was jedoch in der Praxis zumeist mit höherem manuellen Arbeitsaufwand verbunden ist. In einer Ausführungsform ist daher vorgesehen, dass ein Großteil des ersten Fasermaterials durch ein Umflechten bzw. Umwickeln auf das betreffende Kernteil aufgelegt wird und allenfalls ein kleinerer Anteil des ersten Fasermaterials als flächiges Faserverbundhalbzeug, gegebenenfalls zugeschnitten, abgelegt wird. Letzteres Aufbringen einer Faserwerkstofflage kann insbesondere (zuvor und/oder danach) von einer Umflechtung bzw. Umwicklung begleitet sein.

In einer Ausführungsform ist vorgesehen, dass im Schritt c) die belegten, aneinandergefügten Kernteile mittels einer Halteeinrichtung fixiert werden, die Teil einer für den Schritt e) verwendeten Infiltrationseinrichtung ist. Die Infiltrationseinrichtung kann wiederum Teil eines Werkzeugs sein, in welchem sowohl die Infiltration des Fasermaterials mit dem betreffenden Matrixmaterial als auch eine wenigstens teilweise Aushärtung des Faser-Matrix-Verbunds bewerkstelligt wird. Je nach herzustellender Stückzahl an Faserverbundbauteilen kann beim Aneinanderfügen (Stapeln) der belegten Kernteile und/oder beim Aufbringen des zweiten Fasermaterials (z. B. einseitige oder zweiseitige Decklagen aus Multiaxialgelege, Gewebe etc.) und/oder beim Infiltrieren bzw. Aushärten ein einseitiges Werkzeug oder ein geschlossenes Werkzeug zum Einsatz kommen.

In einer bevorzugten Ausführungsform ist vorgesehen, dass im Schritt d) das Aufbringen des zweiten Fasermaterials das Aufbringen wenigstens einer flächig ausgedehnten Faserwerkstofflage (z. B. textiles Halbzeug) umfasst. Dabei kann es sich insbesondere um einen Zuschnitt bzw. Band eines Multiaxialgeleges, eines Gewebes oder dergleichen handeln.

Das zweite Fasermaterial kann gegebenenfalls auf beiden Seiten der Kernteilreihe, mit gleicher oder unterschiedlicher Materialart und mit gleicher oder unterschiedlicher Materialdicke, aufgelegt werden (auch mehrschichtig).

Für die im Schritt e) vorgesehene Infiltration und Aushärtung kann vorteilhaft auf alle aus dem Bereich der Faserverbundfertigung an sich bekannten Verfahren zurückgegriffen werden (z. B. VAP, RTM etc.). Bei Infiltration eines Epoxidharzes kann, je nach Harzbeschaffenheit, eine Aushärtung z. B. thermisch in einem Temperaturbereich von Raumtemperatur bis etwa 180°C erfolgen.

In einer Ausführungsform ist vorgesehen, dass im Schritt f) das Auftrennen des Bauteilkörpers durch mehrere, jeweils im Bereich eines der Kernteile verlaufende Trennschnitte erfolgt, wobei durch jeden Trennschnitt das am betreffenden Kernteil angrenzende Fasermaterial (und gegebenenfalls das Kernteil) entzweit und somit verschiedenen der resultierenden Faserverbundbauteile zugeordnet wird.

Nicht zur Wiederverwendung vorgesehene Kernteile (z. B. Schaumkerne) können bei deren Entformung gegebenenfalls zerstört werden.

Die durch das Auftrennen des Bauteilkörpers im Schritt f) gebildeten Faserverbundbauteile können gegebenenfalls vor ihrem Einsatz nachbearbeitet werden.

Die Erfindung wird nachfolgend anhand von Ausführungsbeispielen mit Bezug auf die beigefügten Zeichnungen weiter beschrieben. In denen zeigt:
- **Fig. 1**: eine Darstellung zur Veranschaulichung der Herstellung einer Mehrzahl von faserverstärkten Profilen, deren Profilquerschnitt über die Profillängserstreckung variiert,
- **Fig. 2**: eine Darstellung zur Veranschaulichung der Herstellung einer Mehrzahl von faserverstärkten Profilen, deren Profillängserstreckung einen gekrümmten Verlauf besitzt,
- **Fig. 3**: eine Detaildarstellung aus Fig. 2,
- **Fig. 4**: eine perspektivische Ansicht eines Kernteils gemäß einer weiteren Ausführungsform,
- **Fig. 5**: eine Darstellung zur beispielhaften Veranschaulichung verschiedener Kernteil- bzw. Faserverbundbauteil-Formgestaltungen,
- **Fig. 6**: eine schematische Darstellung einer automatisierten Aufbringung eines Fasermaterials auf ein Kernteil, und
- Fig. 7: eine schematische Darstellung einer Aufbringung eines multiaxialen Fasermaterials auf einzelne Kernteile, einerseits für geradlinig sich erstreckende Kernteile und andererseits für gekrümmt sich erstreckende Kernteile.

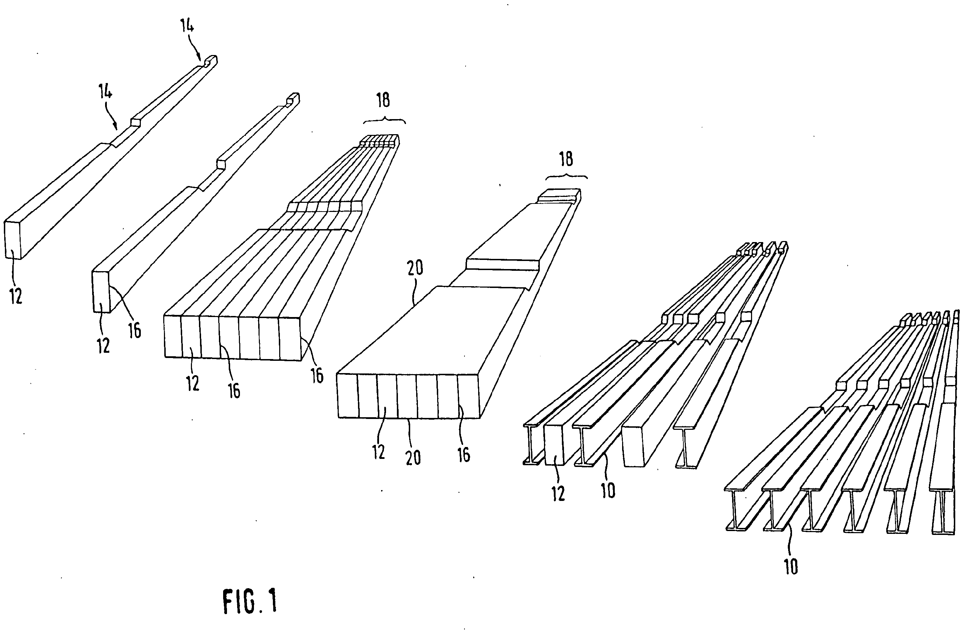

Fig. 1 veranschaulicht von links nach rechts verschiedene Stadien bei der gleichzeitigen Herstellung von sechs Faserverbundbauteilen 10 in Form von Doppel-T-Profilen (siehe Fig. 1 ganz rechts).

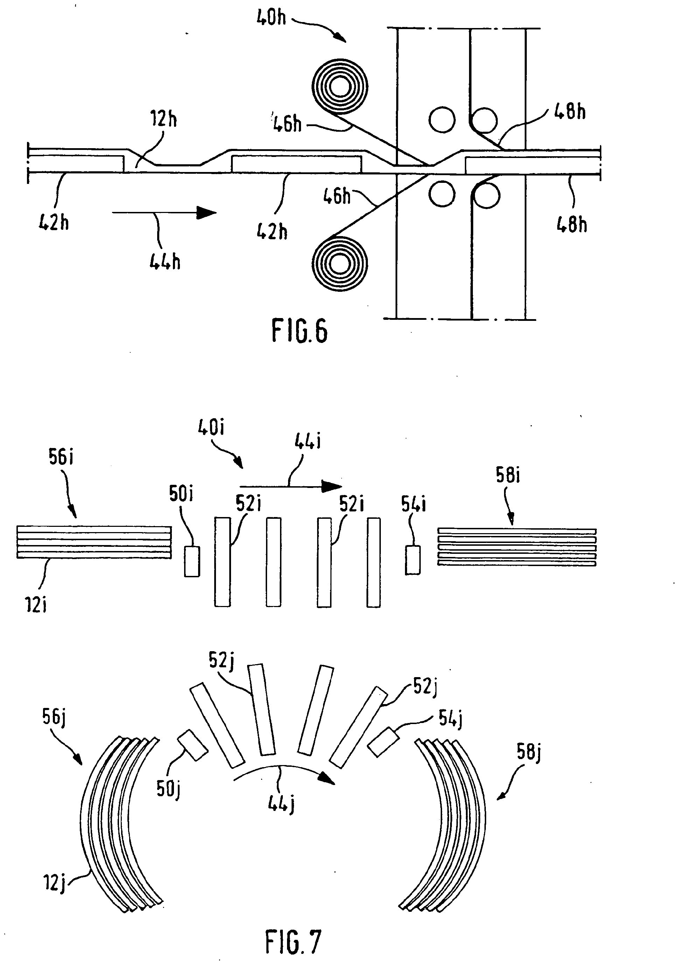

Diese "Paketfertigung" der später beispielsweise als Fußbodenquerträger in einem Flugzeugrumpf einsetzbaren Profile 10 umfasst folgende Schritte:
a) Zunächst werden Kernteile 12 der in Fig. 1 ganz links dargestellten Art bereitgestellt (in Fig. 7 sind sieben derartige Kernteile dargestellt, welche im dargestellten Ausführungsbeispiel als in einer Richtung langgestreckte Kernteilprofile ausgebildet sind, deren Profilquerschnitt über die Profillängserstreckung variiert. Der Profilquerschnitt ist im dargestellten Beispiel rechteckig, wobei an zwei Stellen im Verlauf der Profilerstreckung Einbuchtungen 14 zu erkennen sind, an denen die Querschnittsfläche entsprechend verringert ist. Die Kernteile 12 können beispielsweise durch Fräsen eines handelsüblichen Hartschaumstoffs oder auch eines metallischen Werkstoffs hergestellt werden. Deren Beschaffenheit ist von zweitrangiger Bedeutung, da diese lediglich als formgebende Hilfsmittel bei der Herstellung der eigentlichen Bauteile 10 dienen.
b) In einem nächsten Schritt wird ein erstes Fasermaterial 16 separat auf jedes der Kernteile 12 aufgebracht. Im dargestellten Ausführungsbeispiel werden die Kernteile 12 hierzu mit dem Fasermaterial umflochten. In an sich bekannter Weise kann hierbei eine hinsichtlich der späteren Verwendung der Bauteile 10 günstige Faserorientierung (oder mehrere Faserorientierungen) vorgesehen werden. Die Kernteile 12 dienen hierbei als "Flechtkerne".
c) Die mit dem ersten Fasermaterial 16 belegten Kernteile 12 werden sodann zur Bildung einer Kernteilreihe 18 aneinandergefügt. Im dargestellten Ausführungsbeispiel berühren sich jeweils zwei unmittelbar benachbarte, mit dem Fasermaterial 16 (abgesehen von den Stirnseiten vollständig) umhüllte Kernteile 12 entlang einer ebenen Grenzfläche, so dass die einzelnen belegten Kernteile 12 in Stapelrichtung betrachtet vollflächig aneinander anliegen.
d) Sodann wird ein zweites Fasermaterial 20 entlang wenigstens einer Seite der Kernteilreihe 18 aufgelegt. Im dargestellten Ausführungsbeispiel wird dieses Fasermaterial 20 sowohl an der Unterseite als auch der Oberseite der dargestellten Kernteilreihe 18 aufgebracht.
e) Der in dieser Weise geschaffene Aufbau bestehend aus den aneinandergereihten, formgebenden Kernteilen 12 und den Fasermaterialen 16, 20 wird sodann mit einem geeigneten Matrixmaterial (z. B. Epoxidharz) infiltriert und thermisch ausgehärtet. Die Zugabe des aushärtbaren Matrixwerkstoffes erfolgt in einer bevorzugten Ausführungsform durch Verwendung eines Vakuuminfusionsverfahrens, z. B. mittels eines Standardinfusionsverfahrens wie VAP, VARI, etc. hierbei kann z. B. eine Infiltrationsanordnung mit Membranaufbau verwendet werden, wobei in einer Abdeckfolie und/oder einem Werkzeug entsprechende Ein- und Auslässe für eine Harzmatrix vorgesehen sind. Ein solcher Vakuumaufbau kann gegebenenfalls auch für eine Kompaktierung der mit Fasermaterial belegten Kernteilreihe 18 verwendet werden. Wenn die belegte Kernteilreihe mit einer luftdichten Folie bedeckt wird und anschließend der Raum unter der Folie mehr oder weniger evakuiert wird, so wird der Aufbau mit dem atmosphärischen Umgebungsdruck beaufschlagt. Alternativ oder zusätzlich zum Evakuieren des von der Folie begrenzten Raumes kann ein erhöhter Umgebungsdruck angewendet werden, etwa indem die belegte Kernteilreihe 18 samt Folie in einen Autoklaven gebracht wird. Die Aushärtung in diesem Schritt kann vollständig oder auch nur als Teilaushärtung vorgesehen sein.
f) Zuletzt wird der im vorangegangenen Schritt durch Infiltration und Aushärtung geschaffene Bauteilkörper in mehrere Abschnitte aufgetrennt, welche (gegebenenfalls nach einer abschließenden Nachbearbeitung) die Faserverbundbauteile 10 darstellen. Im Allgemeinen, abhängig von der Formgestaltung der Kernteile 12 und der Stärke der Bindung des Fasermaterials an der Oberfläche der Kernteile 12, wird es nicht möglich sein, vor dem Auftrennen des Bauteilkörpers diesen zu entkernen. In einer Ausführungsform ist daher vorgesehen, dass durch Trennschnitte sowohl das Fasermaterial 16, 20 als auch die Kernteile 12 durchtrennt werden (Kernteile 12 nicht wiederverwendbar). In einer anderen Ausführungsform ist vorgesehen, dass Trennschnitte derart ausgeführt werden, dass damit lediglich das Fasermaterial 16, 20 durchtrennt wird und die sodann freigegebenen Kernteile 12 wiederverwendbar sind.

Mit dem beschriebenen Herstellungsverfahren werden in der in Fig. 1 dargestellten Weise unter Verwendung von sieben Kernteilen 12 gleichzeitig sechs faserverstärkte Doppel-T-Träger 10 hergestellt. Das Auftrennen des Bauteilkörpers erfolgt hierbei durch sieben, jeweils im Bereich eines der Kernteile 12 verlaufende (in Fig. 1 vertikale) Trennschnitte, wobei durch jeden Trennschnitt das am betreffenden Kernteil 12 angrenzende Fasermaterial 16, 20 entzweit und somit verschiedenen der resultierenden Faserverbundbauteile 10 zugeordnet wird.

Abweichend vom dargestellten Ausführungsbeispiel könnte den einzelnen Trägern 10 in einfacher Weise ein etwa C-förmiges Profil verliehen werden, indem die vertikalen Trennschnittebenen gegenüber dem dargestellten Ausführungsbeispiel etwas versetzt (etwa um die halbe Breite eines Kernteils 12) gewählt werden.

Ausgehend von dem in Fig. 1 dargestellten Bauteilkörper könnten darüber hinaus z. B. (doppelt so viele) T-Träger oder L-Träger durch den Auftrennungsschritt hergestellt werden, indem z. B. außer den vertikalen Trennschnitten auch ein horizontaler Trennschnitt vorgesehen wird, beispielsweise die durch Vereinzelung des Bauteilkörpers zunächst erhaltenen Doppel-T-Träger bzw. C-Träger jeweils nochmals horizontal entzweit werden.

Bei dem Ausführungsbeispiel gemäß Fig. 1 sind die Kernteile 12 jeweils langgestreckt und von identischer Form, wobei deren Profillängserstreckung einen geradlinigen Verlauf (orthogonal zur späteren Stapelrichtung) besitzt. Der Profilquerschnitt variiert jedoch über die Profillängsstreckung (vgl. Einbuchtungen 14). Die profilartigen Kernteile 12 sind mit gleicher Orientierung im Kernteilstapel 18 angeordnet.

Bei der nachfolgenden Beschreibung von weiteren Ausführungsbeispielen werden für gleichwirkende Komponenten die gleichen Bezugszahlen verwendet, jeweils ergänzt durch einen kleinen Buchstaben zur Unterscheidung der Ausführungsform. Dabei wird im Wesentlichen nur auf die Unterschiede zu dem bzw. den bereits beschriebenen Ausführungsbeispielen eingegangen und im Übrigen hiermit ausdrücklich auf die Beschreibung vorangegangener Ausführungsbeispiele verwiesen.

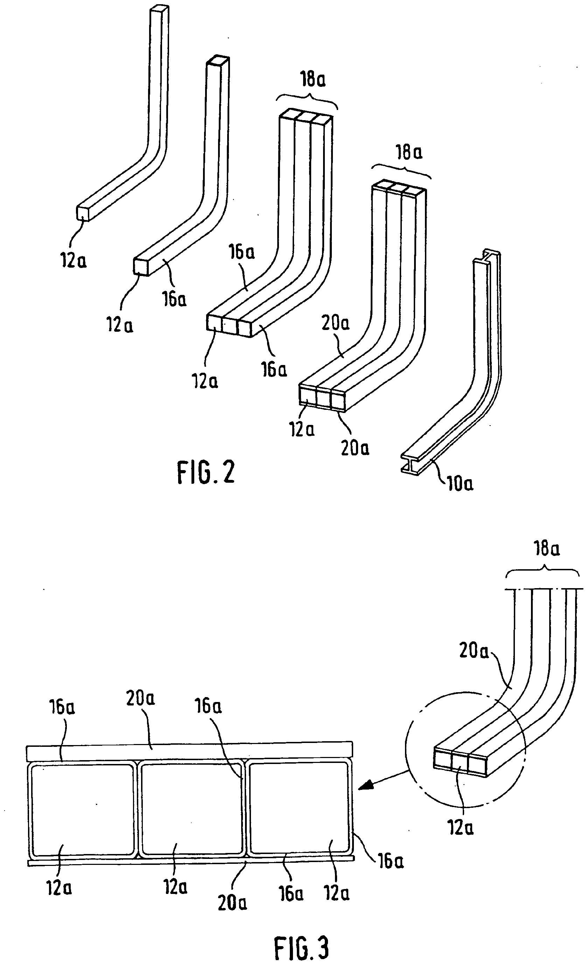

Die Fig. 2 und 3 veranschaulichen ein Ausführungsbeispiel eines Verfahrens zur gleichzeitigen Herstellung mehrerer Faserverbundbauteile, die wie bei dem oben mit Bezug auf Fig. 1 beschriebenen Beispiel wieder als Doppel-T-Profile ausgebildet sind. Abweichend vom obigen Beispiel besitzt die Längserstreckung der hergestellten Profilbauteile jedoch einen gekrümmten Verlauf.

Fig. 2 zeigt in einer der Fig. 1 ähnlichen Darstellung ganz links ein Kernteil 12a, welches für das nachfolgend beschriebene Verfahren wieder in identischer Form mehrfach bereitgestellt wird. Weiter rechts in Fig. 2 sind wieder weitere Zwischenstadien der Herstellung dargestellt, nämlich
- ein mit einem ersten Fasermaterial 16a belegtes (z. B. umwickeltes) Kernteil 12a,
- eine durch Aneinanderfügen der mit dem ersten Fasermaterial 16a belegten Kernteile 12a gebildete Kernteilreihe 18a,
- die zusätzlich an ihrer Unterseite und Oberseite mit einem zweiten Fasermaterial 20a belegte Kernteilreihe 18a, und
- ein nach Infiltration, Aushärtung und Auftrennung des Bauteilkörpers erhaltenes Faserverbundbauteil 10a.

Fig. 3 veranschaulicht mit einer vergrößerten Detaildarstellung nochmals die Anordnung der Fasermaterialien 16a, 20a entlang der Längsseiten der Kernteilreihe 18a. Hierbei ist beispielhaft dargestellt, dass die Fasermaterialschichten 20a an den beiden einander entgegengesetzten Flachseiten (Oberseite und Unterseite) der Kernteilreihe 18a auch mit unterschiedlichen Materialdicken vorgesehen sein können. Derart unterschiedliche Schichtdicken des zweiten Fasermaterials 20a, wie auch das Verhältnis dieser Schichtdicken zur Schichtdicke des ersten Fasermaterials 16a, können vorteilhaft den am fertigen Bauteil 10a zu erwartenden mechanischen Belastungen angepasst werden. In dieser Hinsicht ist es unter Umständen auch günstig, in der Schnittebene von Fig. 3 betrachtet und/oder in Längsrichtung der Kernteilreihe betrachtet, abweichend vom dargestellten Ausführungsbeispiel eine nicht-einheitliche Dicke und/oder ein nicht-einheitliches Material für wenigstens eines der Fasermaterialen 16a, 20a vorzusehen.

Die am Ende des Herstellungsprozesses erfolgenden Trennschnitte zur Vereinzelung der Bauteile 10a (in eine Mehrzahl von Doppel-T-Profilen) sind in Fig. 3 gestrichelt eingezeichnet.

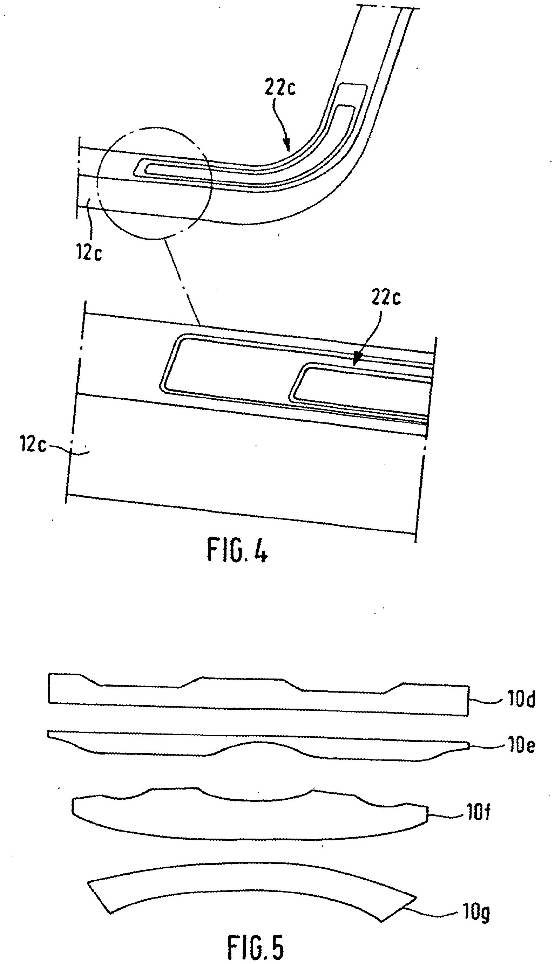

Fig. 4 ist eine Detaildarstellung zur Veranschaulichung der Art und Weise, wie bei einem Herstellungsverfahren der oben erläuterten Art lokale Aufdickungen am fertigen Faserverbundbauteil geschaffen werden können.

In Fig. 4 oben ist ein Abschnitt eines bei dem Herstellungsverfahren verwendeten Kernteils 12c dargestellt, welches in einem gekrümmt verlaufenden Abschnitt eine gestufte Aussparung 22c aufweist. Im übrigen besitzt das Kernteil 12c beispielsweise eine rechteckige Querschnittskontur.

Bei diesem Ausführungsbeispiel ist vorgesehen, dass im Rahmen des Auflegens eines ersten Fasermaterials auf jedes der Kernteile 12c zunächst die Aussparung 22c mit "zusätzlichem ersten Fasermaterial" vollständig aufgefüllt wird, bevor das Kernteil 12c auch in den der Aussparung 22c benachbarten Bereichen mit erstem Fasermaterial belegt (z. B. umwickelt und/oder umflochten) wird. Im Bereich der Aussparung 22c entsteht somit am fertigen Bauteil (nicht dargestellt) eine lokale Aufdickung, die gewissermaßen nach "innen gerichtet" ist. Alternativ oder zusätzlich könnten selbstverständlich auch "nach außen" gerichtete Aufdickungen vorgesehen werden, indem bei der Aufbringung des ersten Fasermaterials entsprechende Aufdickungen ausgebildet werden.

Das in die dargestellte Aussparung 22c einzubringende Fasermaterial könnte beispielsweise aus zwei nacheinander (in die zwei dargestellten Aussparungsbereiche) eingelegten Zuschnitte einer Fasermatte bestehen.

Die Ausbildung der Aussparung 22c in einem gekrümmten Abschnitt des Kernteils 12c zur Ausbildung einer Versteifung am fertigen Bauteil ist aus praktischer Sicht zumeist vorteilhaft, weil Bauteile der hier interessierenden Art in den gekrümmten Abschnitten zumeist stärker belastet werden.

Die in Fig. 4 dargestellte Besonderheit, nämlich Ausbildung einer oder mehrerer lokaler Aussparungen zur Integration zusätzlichen Fasermaterials, lässt sich ohne weiteres für jedes der vorstehend beschriebenen Ausführungsbeispiele gemäß Fig. 1 bzw. Fig. 2 und 3 (oder für eine Kombination davon) vorsehen.

Ein besonderer Vorteil der durch eine Aussparung des verwendeten Kernteils geschaffenen Aufdickung ist es, dass das zusätzlich lokal am Kernteil aufgebrachte erste Fasermaterial die Bildung einer Kernteilreihe mit vollflächig aneinander anliegenden Kernteilen auch dann nicht behindert, wenn die Aussparung "in Stapelrichtung" orientiert ist, d. h. in der Kernteilreihe einem benachbarten Kernteil zugewandt ist. Demgegenüber ist es bei der Schaffung von lokalen Aufdickungen durch "am Kernteil nach außen überstehendes Fasermaterial" zumeist zweckmä-βig, das zusätzliche Fasermaterial auf einer Seite des Kernteils vorzusehen, die in der Kernteilreihe nicht unmittelbar einem benachbarten Kernteil zugewandt ist. Bei den in den Fig. 1 und 2 dargestellten Kernteilreihen 18 bzw. 18a sind dies die Oberseiten und Unterseiten der betreffenden Kernteilreihe.

Im Hinblick auf die bevorzugte Verwendung der Faserverbundbauteile als ein Strukturbauteil im Flugzeugbau können lokale Aufdickungen insbesondere in gekrümmten und/oder in ihrer Konturfläche verringerten Abschnitten eines Profilbauteils besonders zweckmäßig sein.

Das beschriebene Herstellungsverfahren ist wie bereits erläutert insbesondere zur "Paketfertigung" einer Mehrzahl identischer Faserverbundbauteile geeignet, die insgesamt profilartig sind, bei denen jedoch der Profilquerschnitt über die Profillängserstreckung variiert und/oder die Profillängserstreckung in einem oder mehreren Bereichen gekrümmt ist.

Fig. 5 zeigt Längsschnitte durch verschiedene Faserverbundbauteile 10d, 10e, 10f und 10g, die mit dem beschriebenen Verfahren hergestellt werden können. Die dargestellten Längsschnittformen sind selbstverständlich lediglich beispielhaft zu verstehen und sollen die große Flexibilität des Verfahrens hinsichtlich der Formgebung der herstellbaren Faserverbundbauteile illustrieren.

Bei dem beschriebenen Verfahren können viele Arbeitsschritte vorteilhaft wenigstens teilweise automatisiert durchgeführt werden. Dies sei nachfolgend mit Bezug auf die Fig. 6 und 7 beispielhaft für den Schritt des separaten Auflegens des ersten Fasermaterials auf jedes der mehreren Kernteile veranschaulicht.

Fig. 6 zeigt schematisch eine Vorrichtung 40h, mittels welcher ein Teil des im Schritt b) auf ein Kernteil 12h aufzulegenden ersten Fasermaterials automatisiert aufgebracht wird.

Jedes Kernteil 12h wird zunächst an zwei einander entgegengesetzten Längsseiten abschnittweise mit Zuschnitten 42h eines textilen Halbzeugs versehen (z. B. etikettartig aufgeklebte Zuschnitte).

Sodann wird das abschnittweise bereits mit erstem Fasermaterial (Zuschnitte 42h) versehene Kernteil 12h in Richtung des Pfeils 44h der Länge nach durch die Vorrichtung 40h gefördert. Die in Fig. 6 einander entgegengesetzten Ober- und Unterseiten des Kernteils 12h werden hierbei jeweils mit einem durchgehenden Band 46h aus Fasermaterial (z. B. textiles Halbzeug) versehen, welches von einer jeweiligen Vorratsrolle abgezogen wird. Schließlich wird in ebenfalls automatisierter Weise durch die Vorrichtung 40h noch eine umhüllende Fasermaterialschicht 48h, im dargestellten Ausführungsbeispiel durch Umflechten, ausgebildet.

Mehrere dieser mit erstem Fasermaterial 42h, 46h und 48h belegten Kernteile 12h werden anschließend zur Bildung einer Kernteilreihe aneinandergefügt und mit einem zweiten, für alle Kernteile gemeinsamen Fasermaterial belegt, wie dies bereits bei den obigen Beispielen gemäß Fig. 1 bzw. Fig. 2 und 3 beschrieben wurde. Auch das (nicht dargestellte) Auflegen des zweiten Fasermaterials kann gegebenenfalls in automatisierter Weise erfolgen.

Für die mechanischen Eigenschaften der unter Verwendung der Vorrichtung 40h hergestellten Faserverbundbauteile kommt es unter anderem auf die Schichtdicke und Faserorientierung der einzelnen Fasermaterialien, hier der Fasermaterialien 42h, 46h und 48h an. In einer Weiterbildung der in Fig. 6 dargestellten Ummantelungsmethode ist eine Vorrichtung mit mehreren in Durchlaufrichtung des Kernteils hintereinander angeordneten Umflechtungsstationen vorgesehen. Eine derartige Weiterbildung wird nachfolgend mit Bezug auf Fig. 7 beschrieben.

In Fig. 7 ist oben schematisch eine Vorrichtung 40i dargestellt, welche eine Kernzufuhreinrichtung 50i, mehrere (hier: vier) Beschichtungsstationen (z. B. Rundflechteinrichtungen, gegebenenfalls auch mit Einrichtungen zur Integration zusätzlicher Fasermaterialien) 52i und eine Schneideeinrichtung 54i zum Durchtrennen des Fasermaterials umfasst.

Ein Vorrat an nacheinander durch die Vorrichtung 40i hindurchzufördernden Kernteilen 12i ist mit 56i bezeichnet. Nach Beschichtung der Kernteile 12i mittels der Vorrichtung 40i wird ein Vorrat 58i von mit Fasermaterial belegten Kernteilen erhalten. Die Rundflechtstationen umflechten die Kernteile 12i in diesem Beispiel in unterschiedlichen Faserorientierungen (z. B. +45°, -45°, -45°, +45°).

In Fig. 7 unten ist eine geringfügig modifizierte Vorrichtung 40j dargestellt, bei welcher die einzelnen Bearbeitungsstationen 50j, 52j und 54j entlang einer gekrümmten Bahn 44j angeordnet sind. Diese Bearbeitungsbahn ist in Anpassung an die gekrümmte Form der zu beschichtenden Kernteile 12j gewählt.

## Patentansprüche

1. Verfahren zur Herstellung von mehreren Faserverbundbauteilen (10), umfassend die Schritte:
a) Bereitstellen mehrerer Kernteile (12),
b) separates Aufbringen eines ersten Fasermaterials (18) auf jedes der Kernteile (12),
c) Aneinanderfügen der mit dem ersten Fasermaterial (16) belegten Kernteile (12) zur Bildung einer Kernteilreihe (18),
d) Aufbringen eines für die Kernteilreihe (18) gemeinsamen zweiten Fasermaterials (20) entlang wenigstens einer Seite der Kernteilreihe, an welcher die Kernteile (12) mit dem ersten Fasermaterial (16) belegt sind,
e) Infiltrieren und Aushärten des ersten und zweiten Fasermaterials (16, 20) zur Bildung eines faserverstärkten Bauteilkörpers, und
f) Auftrennen des Bauteilkörpers in mehrere Abschnitte, welche die mehreren Faserverbundbauteile (10) darstellen, wobei das Auftrennen durch mehrere, jeweils im Bereich eines der Kernteile verlaufende Trennschnitte erfolgt, wobei durch jeden Trennschnitt das am betreffenden Kernteil (12) angrenzende Fasermaterial (16, 20) entzweit und somit verschiedenen der resultierenden Faserverbundbauteile (10) zugeordnet wird,
**dadurch gekennzeichnet, dass** die Kernteile (12) im Schritt a) mit jeweils einer lokalen Aussparung (22) an der Kernteiloberfläche bereitgestellt werden und die lokalen Aussparungen (22) im Schritt b) zunächst mit zusätzlichem Fasermaterial ausgefüllt und nachfolgend beim Aufbringen des ersten Fasermaterials (16) vollständig überdeckt werden,

2. Verfahren nach Anspruch 1, wobei die Kernteile (12) als Profilteile ausgebildet sind, deren Profilquerschnitt über die Profillängserstreckung variiert und/oder deren Profillängserstreckung einen wenigstens abschnittweise gekrümmten Verlauf besitzt.

3. Verfahren nach einem der vorangehenden Ansprüche, wobei das zusätzliche Fasermaterial von jeweils einem oder mehren Zuschnitten eines textilen Halbzeuges gebildet wird.

4. Verfahren nach einem der vorangehenden Ansprüche, wobei im Schritt a) identische Kernteile (12) bereitgestellt werden.

5. Verfahren nach einem der vorangehenden Ansprüche, wobei im Schritt b) das Aufbringen des ersten Fasermaterials (16) ein Umflechten und/oder Umwickeln der einzelnen Kernteile (12) umfasst.

6. Verfahren nach einem der vorangehenden Ansprüche, wobei im Schritt c) die belegten, aneinandergefügten Kernteile (12) mittels einer Halteeinrichtung fixiert werden, die Teil einer für den Schritt e) verwendeten Infiltrationseinrichtung ist.

7. Verfahren nach einem der vorangehenden Ansprüche, wobei im Schritt d) das Aufbringen des zweiten Fasermaterials (20) das Aufbringen wenigstens einer flächig ausgedehnten Faserwerkstofflage umfasst.

8. Verfahren nach einem der vorangehenden Ansprüche, wobei die lokalen Aussparungen (22) jeweils als gestufte Aussparungen ausgebildet sind.

9. Verfahren nach einem der vorangehenden Ansprüche, wobei die lokalen Aussparungen (22) in der in Schritt c) vorgesehenen Aneinanderreihungsrichtung orientiert und somit einem in der Kernteilreihe (18) benachbartem Kernteil (12) zugewandt sind.

## Claims

1. A method for manufacturing a plurality of fiber composite components (10), comprising the steps of:
a) producing several core portions (12);
b) separately applying a first fiber material (16) to each of the core portions (12),
c) assembling the core portions (12) provided with the first fiber material (16) to form a sequence (18) of core portions,
d) applying a second fiber material (20) common to the sequence (18) of core portions along at least one side of the sequence of core portions on which the core portions (12) are provided with the first fiber material (16),
e) impregnating and hardening the first and second fiber materials (16, 20) to form a fiber-reinforced component body, and
f) separating the component body into several sections, which represent the plurality of fiber composite components (10), wherein the separation is achieved by means of several cuts each extending in the area of one of the core portions, wherein the fiber material (16, 20) adjacent to the respective core portion (12) is divided by each cut and is thus assigned to different ones of the resulting fiber composite components (10),
**characterized in that** the core portions (12) in step a) are each provided with a local recess (22) on the surface of the core portion, and the local recesses (22) are then filled in step b) with additional fiber material and then entirely covered during the application of the first fiber material (16).

2. The method according to claim 1, wherein the core portions (12) are formed as profile portions with a varying profile cross-section along the profile longitudinal extension and/or with an at least stepwise curved shape along the profile longitudinal extension.

3. The method according to any one of the preceding claims, wherein the additional fiber material is formed from one or several cuts of a textile semi-finished product.

4. The method according to any one of the preceding claims, wherein, in step a), identical core portions (12) are produced.

5. The method according to any one of the preceding claims, wherein the application of the first fiber material (16) in step b) comprises braiding and/or wrapping the individual core portions (12).

6. The method according to any one of the preceding claims, wherein in step c), the coated and assembled core portions (12) are fixed by a holding means which forms part of the impregnation device used for step e).

7. The method according to any one of the preceding claims, wherein, in step d), the application of the second fiber material (20) comprises the application of at least one planar expanded fiber material.

8. The method according to any one of the preceding claims, wherein the local recesses (22) are each formed as stepped recesses.

9. The method according to any one of the preceding claims, wherein the local recesses (22) are oriented in the alignment direction provided in step c) and are thus facing a core portion (12) which is adjacent to the sequence (18) of core portions.

## Revendications

1. Procédé de fabrication d'une pluralité de parties de fibres composites (10), comprenant les étapes suivantes :
a) production de plusieurs parties de coeur (12),
b) application séparée d'un premier matériau de fibre (16) sur chacune des parties de coeur (12),
c) assemblage des parties de coeur (12) revêtues du premier matériau de fibre (16) pour former une séquence de parties de coeur (18),
d) application d'un second matériau de fibre (20) communs la séquence de parties de coeur (18) le long d'au moins un côté de la séquence de parties de coeur sur lequel les parties de coeur (12) sont revêtues du premier matériau de fibre (16),
e) imprégnation et durcissement des premier et second matériaux de fibre (16, 20) pour former un corps de composant renforcé par des fibres, et
f) séparation du corps de composant en plusieurs sections qui représentent la pluralité de parties de fibres composites (10), dans lequel la séparation s'effectue par plusieurs découpes s'étendant chacune dans la région de l'une des parties de coeur, de telle sorte que le matériau de fibre (16, 20) adjacent au composant de coeur concerné (12) soit divisé par chaque découpe et est donc associé à divers des composants de fibres composites (10) obtenus,
**caractérisé en ce que** les parties de coeur (12) sont munies à l'étape a) d'un évidement local (22) à la surface de la partie de coeur, et **en ce que** les évidements locaux (22) sont ensuite remplais l'étape b) de matériau de fibre supplémentaire puis sont entièrement recouverts lors de l'application du premier matériau de fibre (16).

2. Procédé selon la revendication 1, dans lequel les parties de coeur (12) sont réalisées sous la forme de parties profilées dont la section transversale de profil varie le long de l'étendue longitudinale du profil et/ou dont l'étendue longitudinale du profil présente une forme qui est courbe au moins par parties.

3. Procédé selon l'une quelconque des revendications précédentes, dans lequel le matériau de fibre supplémentaire est respectivement formé d'une ou de plusieurs découpes d'un produit textile semi-fini.

4. Procédé selon l'une quelconque des revendications précédentes, dans lequel, lors de l'étape a), des parties de coeur identiques (12) sont produites.

5. Procédé selon l'une quelconque des revendications précédentes, dans lequel l'application du premier matériau de fibre (16), lors de l'étape b), comprend un tressage et/ou un enveloppement des parties de coeur individuelles (12).

6. Procédé selon l'une quelconque des revendications précédentes, dans lequel, lors de l'étape c), les parties de coeur (12) revêtues et assemblées sont fixées au moyen d'un dispositif de maintien qui fait partie du dispositif d'imprégnation utilité pour l'étape e).

7. Procédé selon l'une quelconque des revendications précédentes, dans lequel, lors de l'étape d), l'application du second matériau de fibre (20) comprend l'application d'au moins une couche de matière fibreuse plane étendue.

8. Procédé selon l'une quelconque des revendications précédentes, dans lequel les évidements locaux (22) sont chacun réalisés sous la forme d'évidements étagés.

9. Procédé selon l'une quelconque des revendications précédentes, dans lequel les évidements locaux (22) sont orientés dans la direction de juxtaposition prévue l'étape c) et sont ainsi en regard d'une partie de coeur (12) voisine de la séquence de parties de coeur (18).
